Europäisches Patentamt

European Patent Office

Office européen des brevets

(11) Veröffentlichungsnummer: **0 470 606 A1**

# (12) EUROPÄISCHE PATENTANMELDUNG

(21) Anmeldenummer: **91113304.9**

(22) Anmeldetag: **08.08.91**

(51) Int. Cl.5: **F16L  11/12,** B32B 27/18

(30) Priorität: **09.08.90 DE 4025301**

(43) Veröffentlichungstag der Anmeldung:
**12.02.92 Patentblatt  92/07**

(84) Benannte Vertragsstaaten:
**ES FR GB IT SE**

(71) Anmelder: **EMS-INVENTA AG**
**Selnaustrasse 16**
**CH-8001 Zürich(CH)**

(72) Erfinder: **Kerschbaumer, Franz, Dr. rer. nat.**
**Masanerstrasse 147**
**CH-7000 Chur(CH)**

(54) **Antistatische Kraftstoffleitung.**

(57) Antistatische, kälteschlagzähe und peroxydbeständige Kraftstoffleitungen, die aus mindestens zwei unterschiedlichen Polymerschichten aufgebaut sind, von denen mindestens eine mit elektrisch leitenden Additiven modifiziert ist.

Die Erfindung betrifft eine antistatische, kälteschlagzähe und peroxidstabile Kraftstoffleitung für Kraftfahrzeuge mit niedrigem elektrischen Oberflächenwiderstand.

Seit langer Zeit werden in Kraftfahrzeugen Kraftstoffleitungen aus Polyamid 11 und Polyamid 12 eingebaut.

Der Nachteil solcher Rohrleitungen besteht darin, dass sie sich durch die hohe Treibstoffzirkulation, wie sie bei Einspritzmotoren üblich ist, stark aufladen können. Diese statische Ladung kann im Extremfall zu einer explosionsartigen Zerstörung der Leitungen und Austreten von Treibstoff aus den Leitungen führen. Dadurch ist ein erhöhtes Sicherheitsrisiko wegen akuter Brandgefahr gegeben. Es wurden deshalb Entwicklungen durchgeführt, entsprechende Rohrleitungen antistatisch auszurüsten. Gemäss dem Stand der Technik wurden dabei in Polymere mit geringer Leitfähigkeit, besonders Polyamid 11 oder Polyamid 12, elektrisch leitende Additive wie Russ, Kohlefasern, Metallpulver eingemischt. Entsprechend modifizierte Polyamide können zwar zu Rohrleitungen verarbeitet werden und zeigen einen antistatischen Effekt, erfüllen jedoch die hohen Anforderungen der Kraftfahrzeugindustrie nicht, besonders weil die gleichzeitige Modifizierung der Polymeren zur Verbesserung der Schlagzähigkeit und der Benzinbeständigkeit, die einander entgegenwirken, neben der Erhöhung der Peroxidbeständigkeit und der Leitfähigkeit Schwierigkeiten bereitet.

Aus der DE-OS 17 79 905 ist ein Tetrafluorethylenpolymerrohr zum Durchleiten flüssiger Treibstoffe mit niedrigem elektrischen Oberflächenwiderstand bekannt. Es besteht aus zwei konzentrischen Tetrafluorethylenpolymerschichten, von denen die innere Schicht fein verteilte, pulverförmige, inerte, elektrisch leitende Teilchen enthält, während die äussere Schicht frei von solchen Teilchen ist. Aufgrund des verwendeten Materials ist es nicht möglich, ein solches Mehrschichtrohr auf einfache Weise thermoplastisch herzustellen. Ausserdem stehen die hohen Rohstoffkosten für das erforderliche Material einem Einsatz im Automobilbereich entgegen.

Aufgabe der Erfindung ist es, eine Kraftstoffleitung für Kraftfahrzeuge der eingangs genannten Gattung vorzuschlagen, die bei einfacherer und kostengünstiger Herstellung im Betrieb den gewünschten niedrigen elektrischen Oberflächenwiderstand gewährleistet.

Diese Aufgabe wird durch eine Kraftstoffleitung mit den Merkmalen gemäss des Anspruchs 1 gelöst.

Es wurde überraschenderweise festgestellt, dass nicht die gesamte Rohrwand einen niedrigen Oberflächenwiderstand aufweisen muss, sondern dass eine relativ dünne antistatische Schicht genügt, das Gesamtrohr antistatisch so auszurüsten, dass kein Spannungsaufbau über 6KV/cm, bevorzugt über 1KV/cm, mehr gemessen wird.

Ein wesentlicher Vorteil der erfindungsgemässen Kraftstoffleitungen ist, dass sie aus mehreren Schichten bestehen können, von denen nur eine, meist relativ dünne Schicht, antistatisch ausgerüstet sein muss. Die Anordnung dieser antistatischen Schicht im Verbund mit den weiteren Rohrschichten ist dabei nebensächlich.

Es ist weiterhin vorteilhaft, dass die restlichen Schichten der erfindungsgemässen Kraftstoffleitung dieser durch geeignete Modifikation zusätzliche andere wichtige Eigenschaften verleihen, wie Schlagzähigkeit, Benzinundurchlässigkeit.

Bevorzugte Ausführungsformen der erfindungsgemässen Kraftstoffrohrleitungen bestehen aus Polymerschichten aus schlagzähmodifiziertem oder schlagzähmodifikatorfreiem und/oder weichmacherhaltigem oder nicht weichgemachtem Homopolyamid, Copolyamid, Polyamidelastomeren oder aus deren Blends, aus HDPE, Ethylen-Vinylalkohol-Copolymeren, gepfropften Homopolyolefin oder Copolyolefinen, wobei mindestens eine Polymerschicht aus Polyamid besteht. Die bevorzugten Schlagzähmodifikatoren sind handelsübliche EPM und EPDM-Typen, das heisst durch ungesättigte Carbonsäuren funktionalisierte Homo- oder Copolyolefine.

Die antistatische Schicht der erfindungsgemässen mehrschichtigen Kraftstoffrohrleitungen ist durch einen Oberflächenwiderstand von $<10^9 \Omega$, bevorzugt $<10^4 \Omega$ gekennzeichnet. Sie besteht aus Polyamid, HDPE oder einem gepfropften Homopolyolefin oder Copolyolefin, das 5 bis 40 Gew.%, bevorzugt 20 bis 25 Gew.% Leitruss enthält, wobei als Leitruss handelsübliche Qualitäten zu verstehen sind. Bevorzugt sind solche Qualitäten, die den Oberflächenwiderstand des Polymeren auf Werte unter $30 \Omega$, bevorzugt unter $20 \Omega$, senken.

An den erfindungsgemässen Rohrleitungen werden keine 6KV/cm übersteigende Spannungen gemessen.

Eine besonders bevorzugte Ausführungsform der erfindungsgemässen Kraftstoffleitungen besteht aus 3 Polyamid-Schichten, bevorzugt aus Polyamid 12, von denen bevorzugt die Mittelschicht den Leitruss enthält.

Eine weitere Ausführungsform besteht nur aus 2 Polyamidschichten, von denen eine den Leitruss enthält. Beide Schichten können ausserdem schlagzähmodifiziert sein.

Besteht die antistatisch modifizierte Schicht aus HDPE und mindestens eine weitere Schicht aus Polyamid, z.B. schlagzähmodifiziertem PA6, so empfiehlt sich eine Zwischenschicht aus einem verträglichmachenden funktionalisierten Copolyolefin.

Üblicherweise besitzen die erfindungsgemässen Kraftstoffleitungen eine Gesamtrohrdicke von 0,8 bis 2 mm, bevorzugt 1 mm. Die Schichtdicke der antistatischen Schicht beträgt hierbei 5 bis 20 % der Gesamtrohrdicke, bevorzugt 0,1mm.

Die Dicken der übrigen Polymerschichten sind dem Anforderungsprofil entsprechend anzupassen.

Erfindungsgemässe Kraftstoffleitungen sind sowohl bezüglich ihrer Kälteschlagfestigkeit nach SAE J 844 und ISO 7628, bezüglich ihrer Berstdruckbeständigkeit nach SAE J 844 als auch bezüglich ihrer statischen Aufladung sowie bezüglich ihrer Peroxidbeständikeit geprüft worden.

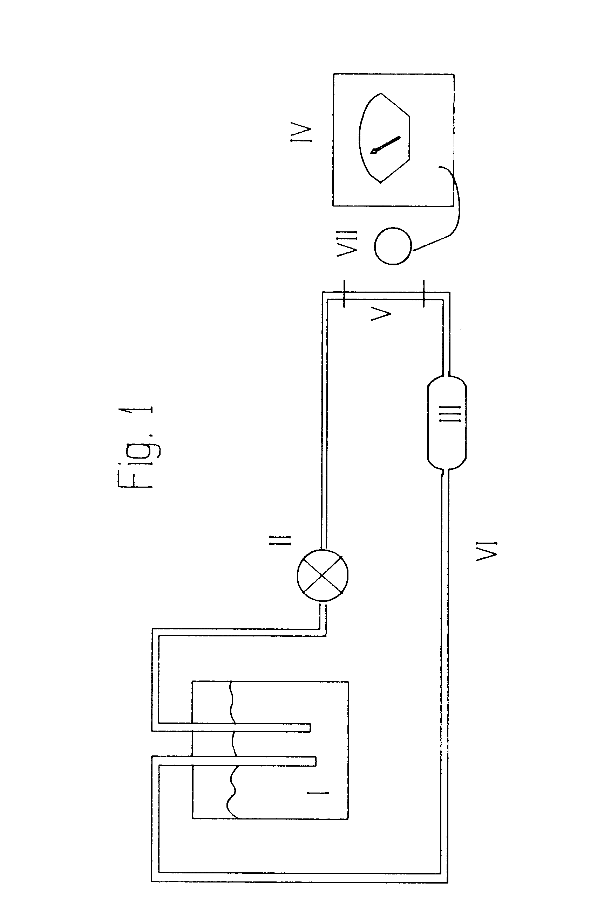

Die Figur 1 zeigt die Messapparatur zur Bestimmung der statischen Aufladung von Kraftstoffrohrleitungen.

In einem Kreislaufsystem mit Indolen-Tank (I), Indolen-pumpe (II), Benzinfilter (III) und Schnellverschluss (VI), ist eine zu prüfende Benzinleitung (V) integriert, die bei 23°C mit 700ml/min durchspült wird. Nach 30 Minuten Wartezeit nimmt die Messstelle (VII) die im Messgerät (IV) angezeigte statische Aufladung auf.

Peroxid - Test:

Reagenzien:

| | |
|---|---|
| Kupfersalzlösung (I) | 1ml Nuodex Nuxtra (Kupfersalzlösung ex FORD USA) 99ml Heptan/Toluol 70 : 30 Volumenteile |
| Peroxidlösung (II) | 33.5ml 80%iges tertiär Butylhydroperoxid + 66.5ml Heptan |
| PN 90: | 10ml Kupfersalzlösung (I) 30ml Peroxidlösung (II) 960ml Heptan/Toluol 70 : 30 Volumen-Teile |

Durchführung:

Zur Prüfung auf ihre Peroxidbeständigkeit werden die Kraftstoffrohrleitungen in 4cm lange Stücke geschnitten, welche unter Zugabe von 50ml frisch zubereiteter PN90-Lösung 7 Tage lang bei 60°C im Ölbad am Rückfluss gehalten werden. Die Prüfung erfolgt nach SAE J 844d (mit Hammer) bei Raumtemperatur.

Die Resultate der oben genannten Prüfungen an erfindungsgemässen Rohren (Beispiele 1 bis 6) sowie an Monoschichtrohrleitungen (Vergleichsbeispiele 1 bis 3) sind in Tabelle 1 wiedergegeben. Alle Tests wurden an Rohren mit einem Aussendurchmesser von 8mm und einer Gesamtwandstärke von 1mm durchgeführt, deren Schichtaufbauten ebenfalls der Tabelle entnommen werden können. Die in der Tabelle angegebenen Polymertypen sind:

| Grilamid XE 3148 | EMS-CHEMIE AG Zürich/Schweiz | schlagzähmodifiziertes PA12 mit Weichmacher Viskosität 900 Pa.s/ 270°/122.6N |
| Grilon R47HW | EMS-CHEMIE AG Zürich/Schweiz | ein hochviskoses, schlagzähmodifiziertes PA6 mit def. Weich- machergehalt Viskosität 20'000 Pa.s/270°/122.6N |
| EVAL F101 | Kuraray, Osaka Japan | Ethylen-Vinylalkohol- Copolymer mit 32 mol% Ethylengehalt;MFI 1.3g/ 10min/190°/21.6N; Dichte 1,19; Schmelz- punkt 181°C |
| XE 3153 | | ein mit 5 Gew.% Malein- säureanhydrid gepfropftes handels- übliches Polypro- pylen MFI (ASTM D-1238) |
| | | 4,0g/10min/230°; Dichte 0.9, Schmelz- punkt 165°C |

Der in Klammern angegebene Wert des Oberflächenwiderstands in Ω bezieht sich auf das russgefüllte Polymer.

Aus den Resultaten der Beispiele 1 bis 6 ist die Wirkung der antistatischen Schicht klar erkennbar. Diese Mehrschichtrohre erfüllen sämtliche Anforderungen bezüglich Schlagzähigkeit, Benzin- und Peroxidbeständigkeit. Die Ergebnisse der Monorohre der Vergleichsbei- spiele zeigen deutlich, dass die Anforderungen mit einem einzigen Polymer nicht erfüllt werden können.

4

TABELLE 1

| Beispiele | SCHICHTAUFBAU ROHRE 8 x 1 mm | KÄLTESCHLAG MIT SCHLAGWERK SAE J 844 d | KÄLTESCHLAG MIT SCHLAGWERK ISO 7628 | SPANNUNGSAUFBAU GEMÄSS BEILAGE A KV/cm | BENZINBESTÄNDIGKEIT BERSTDRUCK NACH BENZINLAGERUNG | PEROXID-BESTÄNDIG-KEIT |
|---|---|---|---|---|---|---|
| 1 | Grilamid XE 3148  0.45 mm Aussen<br>PA 12 mit 20% Leitruss($10^8$ Ω)  0.1 mm Mitte<br>Grilamid XE 3148  0.45 mm Innen | bestanden | bestanden | 6 | 71 bar | bestanden |
| 2 | Grilamid XE 3148  0.45 mm Aussen<br>PA 12 mit 25% Leitruss (20Ω)  0.1 mm Mitte<br>Grilamid XE 3148  0.45 mm Innen | bestanden | bestanden | 1 | 72 bar | bestanden |
| 3 | PA 12 +30% Schlagzähmodifikator +25% Leitruss (25Ω)  0.1 mm Aussen<br>Grilamid XE 3148  0.9 mm Innen | bestanden | bestanden | 0.01 | 68 bar | bestanden |
| 4 | Grilamid XE 3148  0.9 mm Aussen<br>PA 12 +30% Schlagzähmodifikator +25% Leitruss (25Ω)  0.1 mm Innen | bestanden | bestanden | 0.1 | 70 bar | bestanden |
| 5 | HDPE +25% Leitruss  (10Ω)  0.1 mm Aussen<br>Barriere XE 3153 (PP mod)  0.1 mm Mitte<br>Grilon R47 HW  0.8 mm Innen | bestanden | bestanden | 0.05 | 73 bar | bestanden |
| 6 | PA 12 +10% Schlagzähmodifikator +25% Leitruss (25Ω)  0.1 mm Aussen<br>HDPE gepfropft  0.1 mm<br>Grilon R47 HW  0.25 mm<br>EVAL F  0.1 mm<br>Grilon R47 HW  0.45 mm Innen | bestanden | bestanden | 0.1 | 65 bar | bestanden |
| Vergleichs-beispiel 1 | Grilamid XE 3148  ($10^{12}$ Ω)  1 mm (100%) | bestanden | bestanden | 20 | 70 bar | bestanden |
| Vergleichs-beispiel 2 | PA 12 +25% Leitruss  (20Ω)  1 mm (100%) | nicht bestanden | nicht bestanden | 0.1 | 50 bar | nicht bestanden |
| Vergleichs-beispiel 3 | PA 12 +30% Schlagzähmodifikator +25% Leitruss (25Ω)  1 mm (100%) | bestanden | bestanden | 0.1 | 10 bar | nicht bestanden |

## Patentansprüche

1. Antistatische, kälteschlagzähe und peroxidstabile Kraftstoffleitung für mit niedrigem elektrischen Oberflächenwiderstand, dadurch gekennzeichnet, dass sie aus mindestens zwei unterschiedlichen Polymer-

5

Schichten aufgebaut ist, wobei mindestens eine der Schichten mit elektrisch leitenden Additiven modifiziert ist.

2.  Kraftstoffleitung nach Anspruch 1, dadurch gekennzeichnet, dass die mit elektrisch leitenden Additiven modifizierte Schicht einen Oberflächenwiderstand von $< 10^9 \, \Omega$ aufweist.

3.  Kraftstoffleitung nach Anspruch 1 oder 2, dadurch gekennzeichnet, dass mindestens eine der Schichten schlagzäh und/oder mit Weichmacher modifiziert ist.

4.  Kraftstoffleitung nach einem der Ansprüche 1 bis 3, dadurch gekennzeichnet, dass mindestens eine der Polymerschichten aus Polyamid besteht.

5.  Kraftstoffleitung nach Anspruch 4, dadurch gekennzeichnet, dass das Polyamid ein Homo- oder Copolyamid, ein Polyamidelastomeres oder deren Blend ist, wobei die Monomeren bevorzugt solche mit 6 bis 12 C-Atomen sind.

6.  Kraftstoffleitung nach Anspruch 1 oder 2, dadurch gekennzeichnet, dass mindestens je eine der Polymerschichten aus HDPE und/oder einem funktionalisierten Copolyolefin besteht.

7.  Kraftstoffleitung nach den Ansprüchen 1 oder 2, dadurch gekennzeichnet, dass mindestens eine Polymerschicht aus einem Ethylenvinylalkohol- Copolymer besteht.

8.  Kraftstoffleitung nach einem der Ansprüche 2 bis 6, dadurch gekennzeichnet, dass die Polymerschicht mit einem Oberflächenwiderstand $< 10^9 \, \Omega$ entweder aus Polyamid oder HDPE oder einem gepfropften Polyolefin-Mono- oder Copolymeren besteht, die mit 5 bis 40 Gew.%, bevorzugt 20 bis 25 Gew.%, Leitruss gefüllt sind.

9.  Kraftstoffleitung nach einem der voranstehenden Ansprüche, dadurch gekennzeichnet, dass die Innen- und Aussenschicht aus schlagzähmodifiziertem Polyamid 12 bestehen und die mit Leitruss gefüllte Schicht eine von diesen beiden Schichten oder eine dritte Polyamid 12-Schicht ist.

10. Kraftstoffleitung nach einem der voranstehenden Ansprüche, dadurch gekennzeichnet, dass sie durch Coextrusion hergestellt worden ist.

Fig. 1

**Europäisches Patentamt**

**EUROPÄISCHER RECHERCHENBERICHT**

Nummer der Anmeldung

**EP 91 11 3304**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 467 764   (H. KNAPP)<br>* Spalte 2, Zeilen 39-49 * | 1 | F 16 L 11/12<br>B 32 B 27/18 |
| A | | 4,5 | |
| | – – – | | |
| X | DE-A-2 832 547   (S. HAENELT)<br>* Seite 6, Zeile 9 - Seite 7, Zeile 8 * | 1,8,10 | |
| | – – – | | |
| X | FR-A-2 327 479   (SAMUEL MOORE AND CO.)<br>* Seite 2, Zeile 20 - Seite 3, Zeile 35 * | 1,2,4,5,10 | |
| | – – – | | |
| A | US-A-3 068 028   (R.L. ELLIOTT et al.)<br>* Spalte 2, Zeile 67 - Spalte 3, Zeile 15 * | 1,3 | |
| | – – – | | |
| A | DE-B-1 255 446   (SCHMIDT)<br>* Spalte 1, Zeilen 37-43; Figur 1 * | 1,2 | |
| | – – – – – | | |

**RECHERCHIERTE SACHGEBIETE (Int. Cl.5)**

F 16 L
B 32 B

Der vorliegende Recherchenbericht wurde für alle Patentansprüche erstellt

| Recherchenort | Abschlußdatum der Recherche | Prüfer |
|---|---|---|
| Den Haag | 04 November 91 | ANGIUS P. |